# EUROPÄISCHE PATENTSCHRIFT

(11) **EP 1 807 639 B1**
(45) Veröffentlichungstag und Bekanntmachung des Hinweises auf die Patenterteilung: **02.04.2008**
(21) Anmeldenummer: 05804617.8
(22) Anmeldetag: 28.10.2005
(51) Int. Cl.: F16H 55/28, B62D 3/12

(54) **VORRICHTUNG ZUM ANDRÜCKEN EINER ZAHNSTANGE**
DEVICE FOR PRESSING A GEAR RACK
DISPOSITIF POUR COMPRIMER UNE CREMAILLERE

(30) Priorität: 05.11.2004 DE 102004053462
(43) Veröffentlichungstag der Anmeldung: 18.07.2007
(73) Patentinhaber: ZF-Lenksysteme GmbH, 73527 Schwäbisch Gmünd (DE)
(72) Erfinder: BIEBER, Jürgen, 73655 Plüderhausen (DE); BREITWEG, Werner, 73529 Bargau (DE); HAFERMALZ, Jens-Uwe, 73116 Wäschenbeuren (DE); OCKER, Hermann, 73529 Schwäbisch Gmünd (DE); SCHMID, Jochen, 73553 Alfdorf-Rienharz (DE)
(86) Internationale Anmeldenummer: PCT/EP2005/055621
(87) Internationale Veröffentlichungsnummer: WO 2006/048409

(56) Entgegenhaltungen:
- EP-A- 0 680 430
- US-A- 4 619 155
- US-A- 4 724 717
- PATENT ABSTRACTS OF JAPAN Bd. 016, Nr. 576 (M-1345), 16. Dezember 1992 (1992-12-16) & JP 04 224464 A (TOYODA MACH WORKS LTD), 13. August 1992 (1992-08-13)

## Beschreibung

Die Erfindung betrifft eine Vorrichtung zum Andrücken einer Zahnstange an ein Ritzel mit einem Druckstück und einer Stelleinrichtung gemäß dem Oberbegriff von Anspruch 1.

Eine gattungsgemäße Vorrichtung ist aus der US 4,724,717 bekannt- Ferner wird zum Stand der Technik auf die DE 198 11 917- A1- und die US. 4, 619,155 verwiesen.

Zahnstangenlenkungen für Kraftfahrzeuge weisen üblicherweise ein Lenkgehäuse auf; in dem eine Zahnstange längsverschiebbar gelagert ist. Ein in dem Lenkgehäuse drehbar gelagertes Ritzel greift in die Verzahnung der Zahnstange ein und bewirkt bei Drehung der mit dem Ritzel drehfest verbundenen Lenksäule die seitliche Verlagerung der Zahnstange, die wiederum über Spurstangen und Achsschenkel zu einer Verschwenkung der gelenkten Räder des Kraftfahrzeuges führt. Der Eingriff des Ritzels in die Zahnstange wird spielfrei gehalten, in dem ein gegenüber dem Ritzel, an der Zahnstange anliegendes Druckstück unter Federvorspannung die Zahnstange gegen das Ritzel drückt. Aus dem allgemeinen Stand der Technik ist es dabei bekannt, dass das Druckstückspiel über eine Stellschraube eingestellt wird, welche dabei auch die Federvorspannung beeinflusst.

Das Druckstück muss derart ausgestaltet sein bzw. derart gegen die Zahnstange drücken, dass eine Kupplung der Zahnstange und des Ritzels ohne Spiel der miteinander in Eingriff stehenden Zähne aufrecht erhalten werden kann. Dabei müssen Fehler hinsichtlich der Exzentrizität des Ritzels, seines axialen Spiels und des Verschleißes der Zähne berücksichtigt werden. Weiterhin muss der Mechanismus in der Lage sein, Stöße, die von den gelenkten Räder stammen, wenn diese beispielsweise auf ein Hindernis stoßen, ohne Beschädigungen zu ertragen.

Aus der gattungsgemäßen Schrift, der US 4,724,717, ist ein Druckstück und eine Stelleinrichtung zum Andrücken einer Zahnstange gegen ein Ritzel bekannt, bei der zwischen dem Druckstück und der Stelleinrichtung eine Feder angeordnet ist. Die Feder stützt sich dabei auf der Stelleinrichtung ab und drückt das Druckstück gegen die Zahnstange, welche folglich gegen das Ritzel gedrückt wird. Durch ein Verstellen der Stelleinrichtung kann die Federkraft, mit der die Feder das Druckstück an die Zahnstänge drückt, variiert werden.

Das Druckstück weist dabei einen in Richtung auf die Stelleinrichtung überstehenden Zapfen auf, dessen freiliegendes Ende als Anlagefläche für eine Spiralfeder der Stelleinrichtung dient. Die Spiralfeder ist zwischen einer Stellschraube der Stelleinrichtung und dem Zapfen des Druckstückes angeordnet.

Von Nachteil bei der gattungsgemäßen Schrift ist, dass, wie auch beim allgemeinen Stand der Technik, aufgrund der hohen Verzahnungskräfte bei elektromechanischen Lenkungen Klopfgeräusche entstehen. Darüber hinaus ändert sich die Federkraft über die Lebensdauer. Eine Veränderung des Druckstückspiels erfolgt auch durch Verschleiß, was eine Neueinstellung des Druckstückspiels erforderlich macht.

Der vorliegenden Erfindung liegt daher die Aufgabe zugrunde, eine Vorrichtung zum Andrücken einer Zahnstange an ein Ritzel mit einem Druckstück und einer Stelleinrichtung zu schaffen, die die Nachteile des Standes der Technik löst, insbesondere Klopfgeräusche vermeidet sowie kostengünstig herstellbar und montierbar ist.

Diese Aufgabe wird erfindungsgemäß durch die kennzeichnenden Merkmale von Anspruch 1 gelöst.

Dadurch, dass die Anlageflächen des Druckstücks und der Stelleinrichtung in einer Grundstellung aneinander anliegen, entstehen keine Geräusche durch eine Kontaktierung der Anlagefläche des Druckstücks und der Anlagefläche der Stelleinrichtung. Unter der Grundstellung ist zu verstehen, dass keine dynamischen Kräfte bzw. Kräfte durch den Eingriff des Ritzels in die Zahnstange wirken, die geeignet sind, die Zahnstange in Richtung auf das Druckstück zu verschieben.

Durch die federnde Ausgestaltung wenigstens einer der Anlageflächen wird auch beim Umlenken mit großen Lenkgeschwindigkeiten ein spielfreier Verzahnungseingriff gesichert. Dieser spielfreie Verzahnungseingriff reduziert die Geräuschentwicklung beim Umlenken. Die federnde Ausgestaltung der Anlageflächen kann noch durch den Einsatz einer Druckfeder, welche zwischen dem Druckstück und der Stelleinrichtung eingespannt sein kann, ergänzt werden.

Erfindungsgemäß weist das Druckstück einen Druckstückkörper und einen in Richtung auf die Stelleinrichtung überstehenden Zapfen auf, dessen freiliegendes Ende als Anlagefläche ausgebildet ist. Die Stelleinrichtung weist dabei einen zweiteiligen Aufbau aus einer Stellschraube und einer Federscheibe auf. Die Federscheibe ist in der Grundstellung zwischen der Stellschraube und dem Druckstück angeordnet und bildet die Anlagefläche für das freiliegende Ende des Zapfens.

Durch den zweiteiligen Aufbau der Stelleinrichtung wird die für derartige Vorrichtungen wesentliche Dauerfestigkeit erreicht. Außerdem kann auf eine kostenaufwendige Oberflächenbeschichtung der Stellschraube als Korrosionsschutz verzichtet werden. Die Stelleinrichtung lässt sich durch einen zweiteiligen Aufbau, gebildet aus einer Stellschraube und einer Federscheibe, kostengünstig und präzise herstellen.

Erfindungsgemäß kann vorgesehen sein, dass die Federscheibe in der Grundstellung durch den Zapfen eingefedert ist. Somit wird einem auftretenden Verschleiß bzw. einem Setzprozess über die Lebenszeit der Vorrichtung entgegengewirkt. Durch die Vorspannung der Federscheibe wird erreicht, dass das freiliegende Ende des Zapfens auch dann noch an der Federscheibe anliegt, wenn beispielsweise das Ritzel aufgrund von Verschleiß abgenutzt ist. Somit werden störende Geräusche auch nach Verschleiß vermieden.

In einer alternativen Ausgestaltung der Erfindung kann auch der Zapfen federnd ausgebildet sein.

Ein weiterer Vorteil der erfindungsgemäßen Vorrichtung ist, dass Neueinstellungen des Druckstückspiels in einfacher Weise vorgenommen werden können. In einfacher Weise kann dies durch ein weiteres Einschrauben oder ein Zurückschrauben der Stellschraube erfolgen. Vorgesehen sein kann dabei eine Öffnung in der Stellschraube, wodurch beispielsweise über Wegmessungen die Durchbiegung der Federscheibe gemessen bzw. kontrolliert werden kann.

Somit ist eine präzise Einstellung des Druckstückspiels bzw. des Druckstücks möglich.

Erfindungsgemäß kann vorgesehen sein, dass der Zapfen 0,6 mm über eine der Stelleinrichtung zugewandte Kontaktfläche des Druckstückkörpers übersteht. Vorgesehen ist dabei, dass die Federscheibe durch den Zapfen 0,5 mm durchgedrückt bzw. eingefedert wird. Der Abstand zwischen der Kontaktfläche des Druckstückkörpers und der Federscheibe bzw. der Stellschraube (je nachdem, welches Element weiter in Richtung auf das Druckstück übersteht bzw. der Kontaktfläche gegenüberliegt) beträgt somit vorzugsweise 0,1 mm. Dieser Abstand stellt das Druckstückspiel dar.

Die erfindungsgemäße Vorrichtung weist eine hohe Lebensdauer bei unveränderter Wirkung auf, wobei gegebenenfalls das Druckstückspiel neu eingestellt werden kann. Im Unterschied zu der aus der DE 198 11 917 A1 bekannten Vorrichtung ist die erfindungsgemäße Vorrichtung unanfällig gegen Temperaturschwankungen. Von Vorteil ist es, wenn der Druckstückkörper als Aluminium-Druckgussteil ausgebildet und der Zapfen angegossen ist. Von Vorteil ist außerdem, wenn die Federscheibe, welche im Betrieb einer ständigen Wechselbelastung ausgesetzt ist, aus einem hochwertigen Federstahl mit hoher Festigkeit besteht. Die Federscheibe kann dabei z.B. als ebenes Stanzteil ausgebildet und sehr präzise gefertigt sein. Dadurch wird eine toleranzunempfindliche Federkennlinie erreicht. Dies ist ein wesentlicher Vorteil gegenüber unebenen Tellerfedern. Die Stellschraube kann in vorteilhafter Weise als korrosionsbeständiges Druckgussteil, vorzugsweise aus einem Zink-Druckguss hergestellt sein. Insofern der Einsatz einer Druckfeder vorgesehen ist, kann diese vorzugsweise als metallische Spiralfeder ausgebildet sein.

Erfindungsgemäß kann vorgesehen sein, dass die Stellschraube an ihrer dem Druckstück zugewandten Stirnseite eine Auflagefläche zum Auflegen bzw. Positionieren der Federscheibe aufweist. Dabei kann vorgesehen sein, dass die Stellschraube einen Zentrierbund zur radialen Positionierung der Federscheibe aufweist. Der Zentrierbund und die Auflagefläche können dabei an die Stärke und die Form der Federscheibe angepasst sein. Die Federscheibe lässt sich somit in besonders einfacher Weise zwischen der Stellschraube und dem Druckstück anordnen.

Wie sich in Versuchen herausgestellt hat, lässt sich durch die Auflagefläche in einfacher Weise Einfluss auf die Federkennlinie nehmen. Die Auflagefläche kann zur Beeinflussung der Federkennlinie in einer beliebigen Form ausgeführt sein. Vorgesehen sein kann beispielsweise, dass die Auflagefläche parallel und/oder schräg zu der Federscheibe verläuft. Die Auflagefläche kann auch eine Verrundung aufweisen bzw. mit einem Radius versehen sein.

Zur Erzeugung einer progressiven Federkennlinie kann auch vorgesehen sein, dass die Anlagefläche des Zapfens ballig ausgebildet ist.

Vorteilhafte Ausgestaltungen und Weiterbildungen der Erfindung ergeben sich aus den weiteren Unteransprüchen. Nachfolgend ist anhand der Zeichnung ein Ausführungsbeispiel der Erfindung prinzipmäßig dargestellt.

Es zeigt:
- Fig. 1: einen Schnitt durch die erfindungsgemäße Vorrichtung in einer Grundstellung in einer Ausgestaltung, bei der der Zapfen des Druckstücks die Federscheibe einfedert;
- Fig. 2: eine perspektivische Schnittdarstellung durch eine Stelleinrichtung mit einer Stellschraube und einer Federscheibe;
- Fig. 3: einen Schnitt durch die erfindungsgemäße Stelleinrichtung gemäß Fig. 2;
- Fig. 4: eine Draufsicht auf die erfindungsgemäße Stelleinrichtung gemäß Pfeilrichtung IV der Fig. 3;
- Fig. 5a: eine Einzeldarstellung einer möglichen Ausbildung einer Auflagefläche der Stellschraube;
- Fig. 5b: eine Einzeldarstellung einer zu Fig. 5a alternativen Ausbildung der Auflagefläche;
- Fig. 6: eine perspektivische Schnittdarstellung des Druckstückes mit einem Druckstückkörper und einem angegossenen Zapfen;
- Fig. 7: eine perspektivische Darstellung des flruckstücks mit einem Druckstückkörper und einem unabhängig davon ausgebildeten und mit dem Druckstückkörper verbundenen Zapfen; und
- Fig. 8: eine Federkennlinie (Vorspannkraft/Federweg).

Zahnstangenlenkgetriebe, insbesondere für Kraftfahrzeuge, mit Druckstücken zum Kuppeln einer Zahnstange gegen ein Ritzel sind bereits hinlänglich bekannt, wozu nur beispielsweise auf die DE 29 28 732 C2 und die DE 198 11 917 A1 verwiesen wird. Nachfolgend wird deshalb lediglich auf die für die Erfindung relevanten Merkmale näher eingegangen.

Aus dem allgemeinen Stand der Technik und aus den vorgenannten Patentpublikationen ist das Grundprinzip eines derartigen Kupplungsmechanismus für eine Zahnstange und deren Antriebsritzel hinlänglich bekannt.

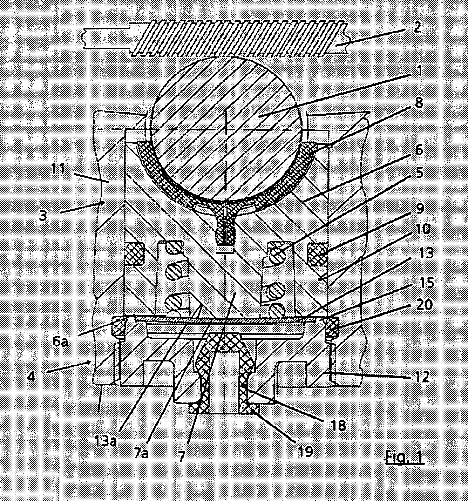

Wie aus Fig. 1 ersichtlich ist, weist die erfindungsgemäße Vorrichtung zum Andrücken einer Zahnstange 1 an ein Ritzel 2 ein Druckstück 3 und eine Stelleinrichtung 4 auf. Zwischen dem Druckstück 3 und der Stelleinrichtung 4 ist ein als Druckfeder 5 ausgebildetes Federelement angeordnet.

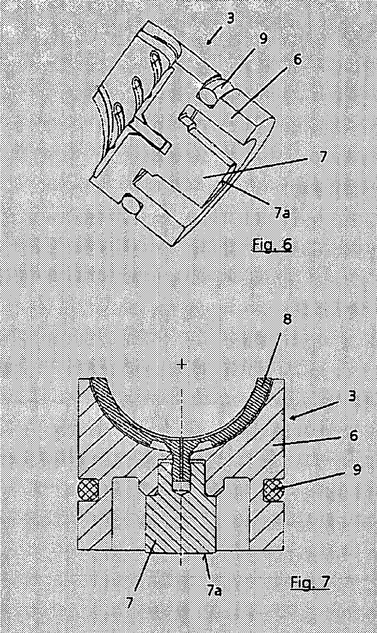

Wie insbesondere aus Fig. 1 und Fig. 7 ersichtlich ist, weist das Druckstück 3 einen Druckstückkörper 6, einen Zapfen 7, eine Einlegefolie 8 und einen O-Ring 9 auf. Gemäß Fig. 1 und Fig. 6 ist der Zapfen 7 mit dem Druckstückkörper 6 einstückig ausgebildet. Im Ausführungsbeispiel ist dabei der Drückstückkörper 6 aus einem Aluminium-Druckgussteil mit angegossenem Zapfen 7 ausgebildet. Fig. 7 zeigt eine Ausbildung, bei der der Zapfen 7 unabhängig von dem Druckstückkörper 6 ausgeführt ist. Dies kann vorteilhaft sein bei hoher Flächenpressung und einem hohen Zapfenverschleiß. Gemäß Fig. 7 ist der Zapfen 7 aus Stahl (beispielsweise als Stahlbolzen) ausgebildet.

Wie sich aus Fig. 1 ergibt, ist die Druckfeder 5 als Spiralfeder ausgebildet, die im wesentlichen innerhalb eines durch den Druckstückkörper 6 gebildeten Hohlraums angeordnet ist.

Zur Reduzierung des Verschleißes ist im Ausführungsbeispiel vorgesehen, dass der Druckstückkörper 6 und der Zapfen 7 mit einer Oberflächenbeschichtung (z.B. Eloxieren) ausgeführt sind.

Der Zapfen 7 verläuft koaxial zur Achse des Druckstückes 3 bzw. des Druckstückkörpers 6.

Wie aus Fig. 1 ersichtlich ist, wird das Druckstück 3 in einem Aufnahmeraum 10 eines Lenkungsgehäuses 11 angeordnet. Der Aufnahmeraum 10 in dem Lenkungsgehäuse 11 ist üblicherweise als zylindrische Bohrung ausgebildet, wobei der Umfang des Druckstückkörpers 6 bzw. der Außendurchmesser des Druckstückkörpers 6 im wesentlichen an den Innendurchmesser der Aufnahmebohrung 10 angepasst ist.

Das der Zahnstange 1 zugewandte Ende des Druckstückkörpers 6 ist im Ausführungsbeispiel mit einer reibungsarmen Einlegefolie 8 versehen, die prinzipiell aus dem Stand der Technik bereits bekannt ist. Die Einlegefolie 8 (die auch als Gleitfolie bezeichnet werden kann) dient als Lagerstelle für die Zahnstange 1. Die Einlegefolie 8 ermöglicht es einerseits, dass der Druckstückkörper 6 die erforderliche Anpresskraft übertragen kann, andererseits wird durch die Einlegefolie 8 sichergestellt, dass bei Verschiebung der Zahnstange 1 keine nennenswerten Reibkräfte und kein Verschleiß hervorgerufen wird.

Hinsichtlich einer besonders bevorzugten Ausgestaltung der Einlegefolie 8 wird auf die DE 103 09 343 verwiesen.

Wie aus Fig. 1 des weiteren ersichtlich ist, wird die Aufnahmebohrung 10 an ihrer von der Zahnstange 1 abgewandten Öffnung durch die Stelleinrichtung 4 verschlossen. Die Stelleinrichtung 4 weist eine Stellschraube 12 und eine Federscheibe 13 auf. Im Ausführungsbeispiel ist die Stelleinrichtung 4 im wesentlichen als zweiteilige Baugruppe ausgebildet. Die Stellschraube 12 und die Federscheibe 13 sind voneinander unabhängige Bauteile. Die Stellschraube 12 ist als korrosionsbeständiges Zink-Druckgussteil ausgebildet und kann definiert in die Aufnahmebohrung 19 eingeschraubt werden.

Die Federscheibe 13 ist zwischen der Stellschraube 12 und dem Druckstück 3 angeordnet. Die Federscheibe 13 bildet die Anlagefläche 13a für das freiliegende Ende des Zapfens 7, d.h. für die Anlagefläche 7a. Die Federscheibe 13 ist im Ausführungsbeispiel durch das freiliegende Ende des Zapfens 7 0,5 mm eingefedert. Der Zapfen steht dabei 0,6 mm in Richtung auf die Stelleinrichtung 4 über den Druckstückkörper 6 über. Der Abstand zwischen der Federscheibe 13 bzw. der Stellschraube 12 und einer zugewandten Kontaktfläche 6a des Druckstückkörpers 6 beträgt somit in der Grundstellung 0,1 mm. Das sogenannte Druckstückspiel (zwischen der Kontaktfläche 6a und der Federscheibe 13) beträgt somit 0,1 mm. Das Druckstückspiel stellt die maximale Beweglichkeit des Druckstücks 3 in Richtung auf die Stelleinrichtung 4 dar.

Die Federscheibe 13 ist im Ausführungsbeispiel als ebenes Stanzteil ausgebildet. Die Federscheibe 13 kann alternativ auch präzise z.B. über Planschleifen gefertigt werden. Die Federscheibe 13 besteht aus einem hochwertigen Federstahl mit hoher Festigkeit.

Wie sich aus den Figuren 1 bis 5b ergibt, weist die Stellschraube 12 an ihrer dem Druckstück 3 zugewandten Stirnseite eine Auflagefläche 14 zum Positionieren der Federscheibe 13 auf. Die Auflagefläche 14 bildet eine ringförmige Auflagefläche für die Federscheibe 13. Die Federscheibe 13 wird durch die Auflagefläche 14 im Bereich ihres Außenumfanges gestützt, so dass die Federscheibe 13 in diesem Bereich nicht zurückweichen kann. Der innere Bereich bzw. mit Ausnahme des auf der Auflagefläche 14 aufliegenden Außenumfanges die gesamte restliche Fläche der Federscheibe 13 ist freischwebend angeordnet bzw. liegt nicht auf der Stellschraube 12 auf, so dass sich diese Fläche durchbiegen kann bzw. eingefedert werden kann. Da der Zapfen 7, welcher die Federscheibe 13 einfedert, koaxial zu dem Druckstückkörper 6 angeordnet ist, wird eine vorteilhafte Einfederung der Federscheibe 13 erreicht. An die Auflagefläche 14 schließt sich, wie aus den Figuren 1 bis 5b ersichtlich ist, ein Zentrierbund 15 an, welcher die Federscheibe 13 radial positioniert. Die Auflagefläche 14 und der Zentrierbund 15 ermöglichen eine einfache Lagefixierung der Federscheibe 13 zu der Stellschraube 12.

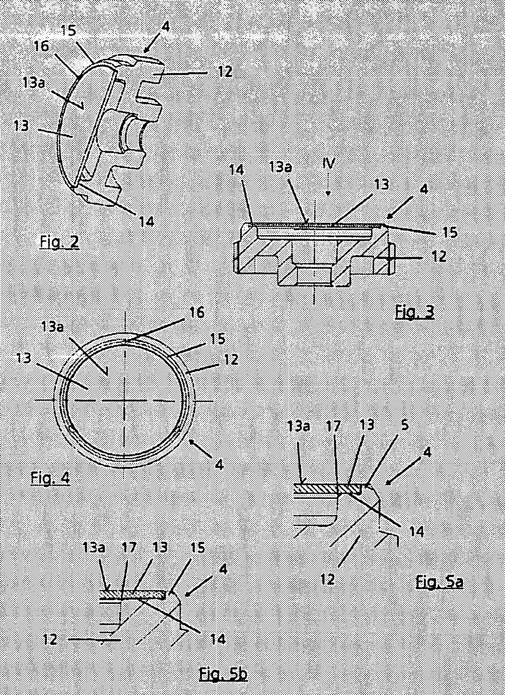

Wie insbesondere aus Fig. 2 und Fig. 4 ersichtlich ist, kann die Federscheibe 12 mittels örtlichen Verstemmungen 16, insbesondere zur Transportsicherung, mit der Stellschraube 12 verbunden sein. Im Ausführungsbeispiel sind drei örtliche Verstemmungen 16 vorgesehen.

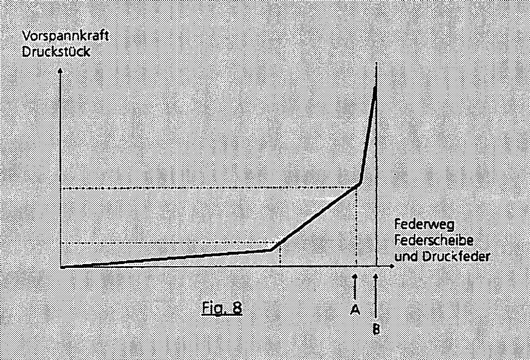

Durch den Verlauf der Auflagefläche 14 kann Einfluss auf die in Fig. 8 dargestellte Federkennlinie genommen werden. Fig. 5a zeigt dabei einen Verlauf der Auflagefläche 14, bei dem Verrundungen 17 vorgesehen sind.
Fig. 5b zeigt einen Verlauf der Auflagefläche 14 schräg zu der Federscheibe 13. Prinzipiell kann auch die Federscheibe 13 im Bereich der Auflagefläche 14 eine Verrundung bzw. einen schrägen Verlauf aufweisen, dies ist im Hinblick auf eine günstige Herstellung der Federscheibe 13 jedoch nicht favorisiert.

Wie sich aus den Figuren 1 bis 3 ergibt, weist die Stellschraube 12 eine Öffnung 18 auf, wodurch eine präzise Einstellung des Druckstücks über Wegmessung erfolgen kann. Die Öffnung 18 ist im Ausführungsbeispiel durch ein Dichtelement 19 in Form eines Dichtstopfens verschlossen.

Fig. 1 zeigt des weiteren einen O-Ring 20, welcher zwischen der Stellschraube 12 und dem Lenkungsgehäuse 11 abdichtet.

Fig. 8 zeigt eine Federkennlinie der Vorspannkraft des Druckstückes und des Federweges der Federscheibe und der Druckfeder 5. Der Punkt A bezeichnet dabei eine mögliche Neueinstellung, während der Punkt B den Endanschlag, bedingt durch das Druckstückspiel darstellt.

Die Federscheibe 13 kann je nach Abstimmung beispielsweise eine Stärke von 0,5 mm bis 1,2 mm, vorzugsweise 0,8 mm betragen. Die Federrate beträgt im Ausführungsbeispiel 1000 N/mm.

Die erfindungsgemäße Lösung ist bevorzugt für Zahnstangenlenkungen für Kraftfahrzeuge geeignet, selbstverständlich hierauf jedoch nicht beschränkt. Die erfindungsgemäße Vorrichtung kann auch bei Zahnstangenlenkungen in anderen Bereichen eingesetzt werden.

### Bezugszeichen

- 1: Zahnstange
- 2: Ritzel
- 3: Druckstück
- 4: Stelleinrichtung
- 5: Druckfeder
- 6: Druckstückkörper
- 6a: Kontaktfläche
- 7: Zapfen
- 7a: Anlagefläche
- 8: Einlegefolie
- 9: O-Ring Druckstück
- 10: Aufnahmeraum
- 11: Lenkungsgehäuse
- 12: Stelleinrichtung
- 13: Federscheibe
- 13a: Anlagefläche
- 14: Auflagefläche
- 15: Zentrierbund
- 16: Verstemmung
- 17: Verrundung
- 18: Öffnung
- 19: Dichtelement
- 20: O-Ring Gehäuse

## Patentansprüche

1. Vorrichtung zum Andrücken einer Zahnstange an ein Ritzel mit einem. Druckstück und einer Stelleinrichtung, wobei
1.1. das Druckstück (3) und die Stelleinrichtung (4) jeweils aufeinander ausgerichtete Anlageflächen (13a,7a) aufweisen, die in einer Grundstellung aneinander liegen, wobei wenigstens eine der Anlagenflächen (13a,7a) federnd ausgebildet ist;
1.2. das Druckstück (3) einen Druckstückkörper (6) und einen in Richtung auf die Stelleinrichtung (4) überstehenden Zapfen (7) aufweist, dessen freiliegendes Ende als Anlagefläche(7a) ausgebildet ist;
1.3. die Stelleinrichtung (4) wenigstens zweiteilig aus einer Stellschraube (12) und einer Feder gebildet ist;
1.4. die Feder zwischen der Stellschraube (12) und dem Druckstück (3) angeordnet ist und die Anlagefläche (13a) für das freiliegende Ende des Zapfens (7) bildet;
**dadurch gekennzeichnet, dass**
1.5. die Feder als ebene Federscheibe (13) ausgebildet ist und sich die Federwirkung **dadurch** ergibt, dass die Stellschraube (12) an ihrer dem Druckstück (3) zugewandten Stirnseite eine ringförmige Auflagefläche (14) zum Auflegen der Federscheibe (13) aufweist, wobei die ringförmige Auflagefläche (14) die Federscheibe (13) im Bereich ihres Außenumfangs stützt, so dass der innere Bereich der Federscheibe (13), welcher die Anlagefläche (13a) für den Zapfen 7 bildet, nicht auf der Stellschraube (12) aufliegt und eingefedert werden kann; und
1.6. dass die Federscheibe (13) in der Grundstellung durch den Zapfen (7) eingefedert ist.

2. Vorrichtung nach Anspruch 1,
**dadurch gekennzeichnet, dass** der Zapfen (7) koaxial zur Achse des Druckstücks (3) verläuft.

3. Vorrichtung nach Anspruch 1 oder 2,
**dadurch gekennzeichnet, dass** der Zapfen (7) 0,3 mm bis 0,8 mm, vorzugsweise 0,6 mm über eine der Stelleinrichtung (4) zugewandte Kontaktfläche (6a) des Druckstückkörpers (6) übersteht.

4. Vorrichtung nach Anspruch 1, 2 oder 3,
**dadurch gekennzeichnet dass** die Federscheibe (13) 0,5 mm eingefedert ist.

5. Vorrichtung nach Anspruch 3 oder 4,
**dadurch gekennzeichnet, dass** die der Stelleinrichtung (4) zugewandte Kontaktfläche (6a) des Druckstückkörpers (6) und die Federscheibe (13) bzw. die Stellschraube (12) in der Grundstellung einen Abstand zueinander aufweisen.

6. Vorrichtung nach einem der Ansprüche 1 bis 6,
**dadurch gekennzeichnet, dass** der Druckstückkörper (6) und/oder der Zapfen (7) eine Oberflächenbeschichtung aufweisen.

7. Vorrichtung nach einem der Ansprüche 1 bis 6,
**dadurch gekennzeichnet, dass** der Zapfen (7) einstückig mit dem Druckstü-ckkorper (6) ausgebildet ist.

8. Vorrichtung nach Anspruch 7,
**dadurch gekennzeichnet, dass** der Drückstückkörper (6) als Aluminium-Druckgussteil ausgebildet und der Zapfen (7) angegossen ist.

9. Vorrichtung nach einem der Ansprüche 1 bis 6,
**dadurch gekennzeichnet, dass** der Zapfen (7) unabhängig von dem Druckstückkörper (6) ausgebildet und mit diesem verbindbar ist.

10. Vorrichtung nach Anspruch 9,
**dadurch gekennzeichnet, dass** der Zapfen (7) aus Stahl ausgebildet ist.

11. Vorrichtung nach einem der Ansprüche 1 bis 10,
**dadurch gekennzeichnet dass** das Druckstück (3) eine reibungsarme Einlegefolie (8) aufweist.

12. Vorrichtung nach einem der Ansprüche 1 bis 11,
**dadurch gekennzeichnet, dass** die Stellschraube (12) aus einem korrosionsbeständigen Druckgussteil, vorzugsweise einem Zink-Druckgussteil gebildet ist.

13. Vorrichtung nach einem der Ansprüche 1 bis 12,
**dadurch gekennzeichnet, dass** die Federscheibe (13) als ebenes Stanzteil ausgebildet ist.

14. Vorrichtung nach einem der Ansprüche 1 bis 13,
**dadurch gekennzeichnet, dass** die Stellschraube (12) einen Zentrierbund (15) zur radialen Positionierung der Federscheibe (13) aufweist.

15. -Vorrichtung nach einem der Ansprüche 1 bis 14,
**dadurch gekennzeichnet, dass** die Federscheibe (13) mittels örtlicher Verstemmungen (16) mit der Stellschraube (12) verbunden ist.

16. Vorrichtung nach einem der Ansprüche 1 bis 15,
**dadurch gekennzeichnet, dass** die Auflagefläche (14) parallel und/oder schräg zu der Federscheibe (13) verläuft.

17. Vorrichtung nach einem der Ansprüche 1 bis 16,
**dadurch gekennzeichnet, dass** die Auflagefläche (14) Verrundungen (17) aufweist.

18. Vorrichtung nach einem der Ansprüche 1 bis 17,
**dadurch gekennzeichnet, dass** die Stellschraube (12) eine Öffnung (18) zur Messung der Durchbiegung der Federscheibe (13) aufweist.

## Claims

1. Apparatus for pressing a rack onto a pinion having a pressure piece and an adjusting device,
1.1. the pressure piece (3) and the adjusting device (4) having bearing faces (13a, 7a) which are oriented towards one another in each case and bear against one another in a basic position, at least one of the bearing faces (13a, 7a) being of resilient configuration;
1.2. the pressure piece (3) having a pressure-piece body (6) and a journal (7) which protrudes in the direction of the adjusting device (4) and the exposed end of which is configured as a bearing face (7a);
1.3. the adjusting device (4) being formed at least in two parts from an adjusting screw (12) and a spring;
1.4. the spring being arranged between the adjusting screw (12) and the pressure piece (3) and forming the bearing face (13a) for the exposed end of the journal (7);
**characterized in that**
1.5. the spring is configured as a flat disc spring (13) and the spring action results from the fact that the adjusting screw (12) has an annular supporting face (14) on its end side which faces the pressure piece (3) for supporting the disc spring (13), the annular supporting face (14) supporting the disc spring (13) in the region of its outer circumference, with the result that the inner region of the disc spring (13) which forms the bearing face (13a) for the journal 7 does not rest on the adjusting screw (12) and can be compressed; and
1.6. **in that** the disc spring (13) is compressed by the journal (7) in the basic position.

2. Apparatus according to Claim 1, **characterized in that** the journal (7) extends coaxially with respect to the axis of the pressure piece (3).

3. Apparatus according to Claim 1 or 2, **characterized in that** the journal (7) protrudes from 0.3 mm to 0.8 mm, preferably 0.6 mm, beyond a contact face (6a) of the pressure-piece body (6) which faces the adjusting device (4).

4. Apparatus according to Claim 1, 2 or 3, **characterized in that** the disc spring (13) is compressed by 0.5 mm.

5. Apparatus according to Claim 3 or 4, **characterized in that that** contact face (6a) of the pressure-piece body (6) which faces the adjusting device (4) and the disc spring (13) or the adjusting screw (12) are at a spacing from one another in the basic position.

6. Apparatus according to one of Claims 1 to 6, **characterized in that** the pressure-piece body (6) and/or the journal (7) have/has a surface coating.

7. Apparatus according to one of Claims 1 to 6, **characterized in that** the journal (7) is configured integrally with the pressure-piece body (6).

8. Apparatus according to Claim 7, **characterized in that** the pressure-piece body (6) is configured as a die-cast aluminium part and the journal (7) is cast integrally.

9. Apparatus according to one of Claims 1 to 6, **characterized in that** the journal (7) is configured independently of the pressure-piece body (6) and can be connected to the latter.

10. Apparatus according to Claim 9, **characterized in that** the journal (7) is configured from steel.

11. Apparatus according to one of Claims 1 to 10, **characterized in that** the pressure piece (3) has a low-friction insertion film (8).

12. Apparatus according to one of Claims 1 to 11, **characterized in that** the adjusting screw (12) is formed from a corrosion-resistant die-cast part, preferably a die-cast zinc part.

13. Apparatus according to one of Claims 1 to 12, **characterized in that** the disc spring (13) is configured as a flat punched part.

14. Apparatus according to one of Claims 1 to 13, **characterized in that** the adjusting screw (12) has a centring collar (15) for positioning the disc spring (13) radially.

15. Apparatus according to one of Claims 1 to 14, **characterized in that** the disc spring (13) is connected to the adjusting screw (12) by means of localized caulked portions.

16. Apparatus according to one of Claims 1 to 15, **characterized in that** the supporting face (14) extends parallel and/or obliquely with respect to the disc spring (13).

17. Apparatus according to one of Claims 1 to 16, **characterized in that** the supporting face (14) has rounded portions (17).

18. Apparatus according to one of Claims 1 to 17, **characterized in that** the adjusting screw (12) has an opening (18) for measuring the deflection of the disc spring (13).

## Revendications

1. Dispositif pour presser une crémaillère contre un pignon avec un élément de pression et un dispositif de commande, dans lequel
1.1. l'élément de pression (3) et le dispositif de commande (4) présentent à chaque fois des surfaces d'appui (13a, 7a) orientées l'une vers l'autre, et appliquées l'une contre l'autre dans la position de base, au moins l'une des surfaces d'appui (13a, 7a) étant réalisée sous forme élastique ;
1.2. l'élément de pression (3) présente un corps d'élément de pression (6) et un tourillon (7) dépassant dans la direction du dispositif de commande (4), dont l'extrémité libre est réalisée sous forme de surface d'appui (7a) ;
1.3. le dispositif de commande (4) est formé au moins en deux parties à partir d'une vis de commande (12) et d'un ressort ;
1.4. le ressort est disposé entre la vis de commande (12) et l'élément de pression (3) et forme la surface d'appui (13a) pour l'extrémité libre du tourillon (7);
**caractérisé en ce que**
1.5. le ressort est réalisé sous forme de rondelle élastique plane (13) et l'effet de ressort s'obtient par le fait que la vis de commande (12) présente sur son côté frontal tourné vers l'élément de pression (3) une surface de support annulaire (14) pour disposer la rondelle élastique (13), la surface de support annulaire (14) supportant la rondelle élastique (13) dans la région de sa périphérie extérieure, de sorte que la région interne de la rondelle élastique (13), qui forme la surface d'appui (13a) pour le tourillon (7), ne repose pas sur la vis de commande (12) et puisse être comprimée ; et
1.6. **en ce que** la rondelle élastique (13) est comprimée par le tourillon (7) dans la position de base.

2. Dispositif selon la revendication 1,
**caractérisé en ce que**
le tourillon (7) s'étend coaxialement à l'axe de l'élément de pression (3).

3. Dispositif selon la revendication 1 ou 2,
**caractérisé en ce que**
le tourillon (7) dépasse de 0,3 mm à 0,8 mm, de préférence de 0,6 mm au-delà d'une surface de contact (6a) du corps de l'élément de pression (6) tournée vers le dispositif de commande (4).

4. Dispositif selon la revendication 1, 2 ou 3,
**caractérisé en ce que**
la rondelle élastique (13) est comprimée de 0,5 mm.

5. Dispositif selon la revendication 3 ou 4,
**caractérisé en ce que**
la surface de contact (6a) du corps de l'élément de pression (6) tournée vers le dispositif de commande (4) et la rondelle élastique ou la vis de commande (12) présentent dans la position de base un espacement mutuel.

6. Dispositif selon l'une quelconque des revendications 1 à 6,
**caractérisé en ce que**
le corps de l'élément de pression (6) et/ou le tourillon (7) présentent un revêtement de surface.

7. Dispositif selon l'une quelconque des revendications 1 à 6,
**caractérisé en ce que**
le tourillon (7) est réalisé d'une seule pièce avec le corps de l'élément de pression (6).

8. Dispositif selon la revendication 7,
**caractérisé en ce que**
le corps de l'élément de pression (6) est réalisé sous forme de pièce en aluminium coulé sous pression et le tourillon (7) est coulé.

9. Dispositif selon l'une quelconque des revendications 1 à 6,
**caractérisé en ce que**
le tourillon (7) est réalisé indépendamment du corps de l'élément de pression (6) et peut être connecté à ce dernier.

10. Dispositif selon la revendication 9,
**caractérisé en ce que**
le tourillon (7) est fabriqué en acier.

11. Dispositif selon l'une quelconque des revendications 1 à 10,
**caractérisé en ce que**
l'élément de pression (3) présente une feuille d'insertion à faible friction.

12. Dispositif selon l'une quelconque des revendications 1 à 11,
**caractérisé en ce que**
la vis de commande (12) est formée d'une pièce coulée sous pression résistant à la corrosion, de préférence une pièce coulée sous pression en zinc.

13. Dispositif selon l'une quelconque des revendications 1 à 12,
**caractérisé en ce que**
la rondelle élastique (13) est réalisée sous forme de pièce estampée plane.

14. Dispositif selon l'une quelconque des revendications 1 à 13,
**caractérisé en ce que**
la vis de commande (12) présente un épaulement de centrage (15) pour le positionnement radial de la rondelle élastique (13).

15. Dispositif selon l'une quelconque des revendications 1 à 14,
**caractérisé en ce que**
la rondelle élastique (13) est connectée à la vis de commande (12) au moyen de matages locaux (16).

16. Dispositif selon l'une quelconque des revendications 1 à 15,
**caractérisé en ce que**
la surface de support (14) s'étend parallèlement et/ou obliquement par rapport à la rondelle élastique (13).

17. Dispositif selon l'une quelconque des revendications 1 à 16,
**caractérisé en ce que**
la surface de support (14) présente des congés de raccordement (17).

18. Dispositif selon l'une quelconque des revendications 1 à 17,
**caractérisé en ce que**
la vis de commande (12) présente une ouverture (18) pour la mesure de la flexion de la rondelle élastique (13).
